# EUROPEAN PATENT SPECIFICATION

(11) **EP 3 038 476 B1**
(45) Date of publication and mention of the grant of the patent: **21.11.2018**
(21) Application number: 14761414.3
(22) Date of filing: 25.08.2014
(51) Int. Cl.: A23P 20/00, A23P 30/00, A23K 10/00, A23K 10/10, A23L 5/00, A23L 27/30

(54) **CHEWY EDIBLE COMPOSITIONS**
ESSBARE KAUZUSAMMENSETZUNGEN
COMPOSITIONS COMESTIBLES À MÂCHER

(30) Priority: 26.08.2013 US 201361869803 P
(43) Date of publication of application: 06.07.2016
(73) Proprietor: Nestec S.A., 1800 Vevey (CH)
(72) Inventor: RUSSELL-MAYNARD, John Kenyon, Orange, New South Wales 2800 (AU); SWANN, Steven Gordon, Orange, New South Wales 2800 (AU)
(74) Representative: Kingsbury, Oliver William
(86) International application number: PCT/IB2014/064052
(87) International publication number: WO 2015/028930

(56) References cited:
- EP-A1- 2 316 279
- WO-A1-01/45517
- WO-A1-03/003856
- WO-A1-2007/104322
- WO-A2-2008/005318
- US-A- 4 689 238

## Description

### BACKGROUND OF THE INVENTION

### Field of the Invention

The invention relates generally to food compositions and particularly to highly palatable, chewy compositions particularly suitable for use as pet treats.

### Description of Related Art

Collagen hydrolysate ("gelatin"), sugar, and water mixtures have been used in the confectionary business to form jelly confectionaries, which are soft and friable, offering little resistance to chewing. To achieve a denser, more chewable, rubbery product, a humectant/plasticizer such as glycerol or sorbitol is often used as a locking agent to bridge across the gelatin triple helix structure to make it more rigid. In this manner, glycerol plays a competing role against the sugar and water since the latter two function to increase the softness of the product.

On an industrial scale, it is difficult to achieve rigidity by merely reducing sugar and water levels in a high glycerol-gelatin mixture because the result would be a highly viscous, sticky and very difficult to handle composition with poor mixing and pumping properties. Indeed, food products that contain gelatin and glycerol *(e.g.,* rolled fondant icings) typically also contain a large amount of sugar, as well as water, fats or oils, to facilitate manipulation of the material. Current techniques typically require hand-kneading or, if mechanized, mixing at high temperatures or using complex high torque equipment such as extruders to manufacture confectionaries having desired levels of rigidity. These known techniques require considerable capital and large factories to implement. Furthermore, resultant products generally have restricted form and as a result, problems arise in molding the products to a desired shape while still maintaining other desired characteristics of the product, such as palatability and chewing duration. WO2007104322 relates to a dry collagen powder as a precursor for the preparation of an homogeneous thermoplastic collagen-based composition, which may further comprise additives. WO0145517 relates to an edible thermoplastic made from about 30 to 50 wt.% protein comprising a mixture of plant and animal derived protein, about 20 to 50 wt.% starch, about 10 to 20 wt.% water, about 1 to 10 wt.% edible fiber, and about 0.5 to 3 wt.% metallic salt hydrate. WO03003856 relates to food or nutritional products containing betaine. EP2316279 relates to sugar free confectionery products, methods of making, and multilayer structures prepared from the confectionery products and chewing gum. US 4,689,238 relates to a shelf-stable, composite food product comprising a dual-texture, low water activity binder having at least one food-flavoring material. The dual-texture, low water activity binder is prepared from a chewy, gelatinous binder material comprising a gelled solution of gelatin in glycerol and a crisp binder material comprising a stabilized protein foam.

There is, therefore, a need for improved techniques for processing and handling blends of gelatin, humectants and/or related polymers.

### SUMMARY OF THE INVENTION

It is, therefore, an object of the present invention to provide techniques for processing and handling high-viscosity gelatin blends, humectant blends, and other polymer mixtures in strong hydrogen-bonding solvents.

It is another object of the invention to provide edible, chewy compositions for use as pet treats, which can be molded and formed into a wide variety of shapes by using simple methods on either a small, bench-top scale or a large, industrialized scale, resulting in improved animal enjoyment and owner interaction, as well as decreased manufacturing costs.

It is another object of the invention to provide a method of preparing and delivering edible treats for pets by molding the product inside its final packaging rather than the conventional technique of requiring a separate manufacturing step and sequentially, a separate packaging step.

One or more of these or other objects are achieved by the methods of the present invention, and the compositions produced thereby, the methods comprising preparing a mixture of glycerol and collagen or a collagen derivative under chilled process conditions to produce an easily manipulable, pourable paste, and cooking and cooling the paste to form a chewy edible composition suitable for use as a pet treat.

Other and further objects, features, and advantages of the present invention will be readily apparent to those skilled in the art.

### BRIEF DESCRIPTION OF THE DRAWINGS

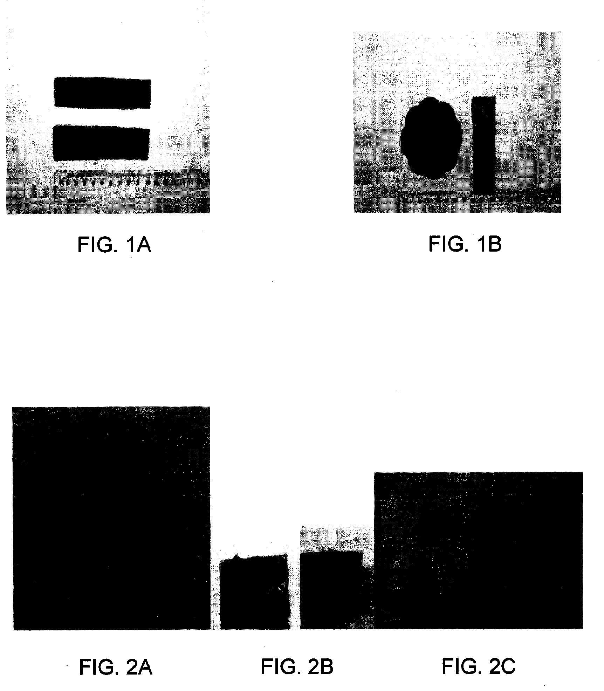

FIGS. 1A and 1B are photographs of two embodiments of the chewy edible compositions. Fig. 1A shows a simple rectangular composition that can be formed by dividing a large form of the composition, such as produced in a cake pan or cookie sheet, *e.g.* by cutting with a knife; Fig. 1B shows a more elaborate shape of the composition, that can be produced, *e*.*g*., with a form or "cookie cutter".
FIGS. 2A - 2C are photographs of embodiments comprising small chewy edible compositions, with short-duration chew times.

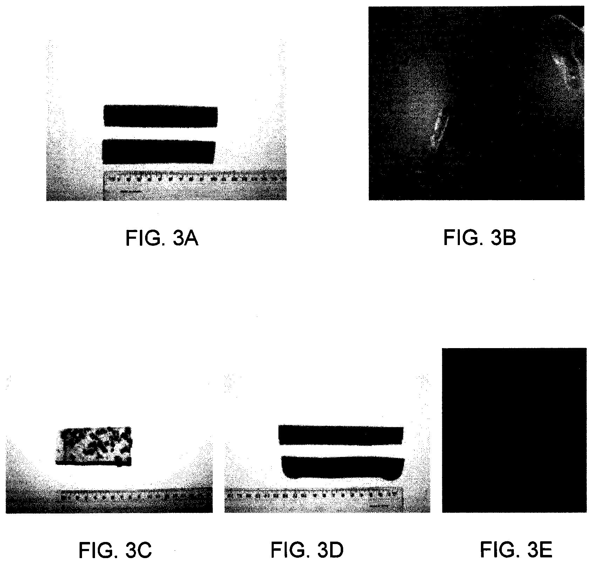

FIGS. 3A - 3E are photographs of embodiments comprising larger chewy edible compostions, with medium- to long-duration chew times, depending on the particular recipe used. Also shown are variations arising from the addition of different colorants, sugars, inclusions and/or other components.

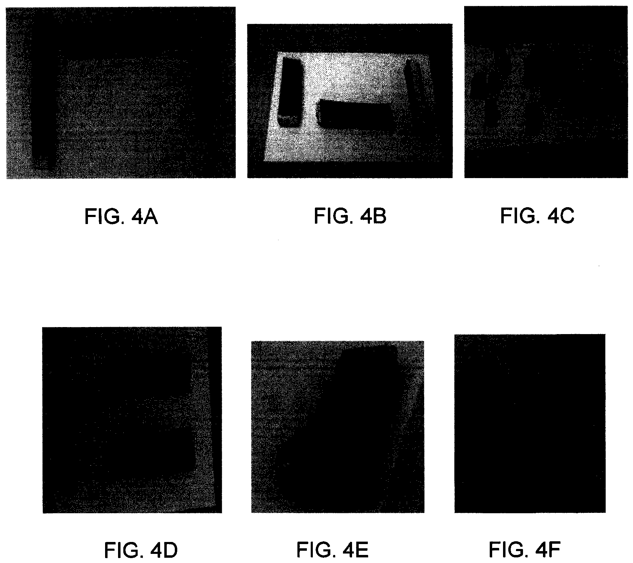

FIGS. 4A - 4G are photographs of embodiments comprising sandwich-type compositions made by layering meat jerky above and/or below the chewy layer made in accordance with the invention. The photographs show the compositions cut into various lengths to manipulate chewing duration. The photographs also show variations arising from the addition of different colorants, sugars, inclusions and/or other components.

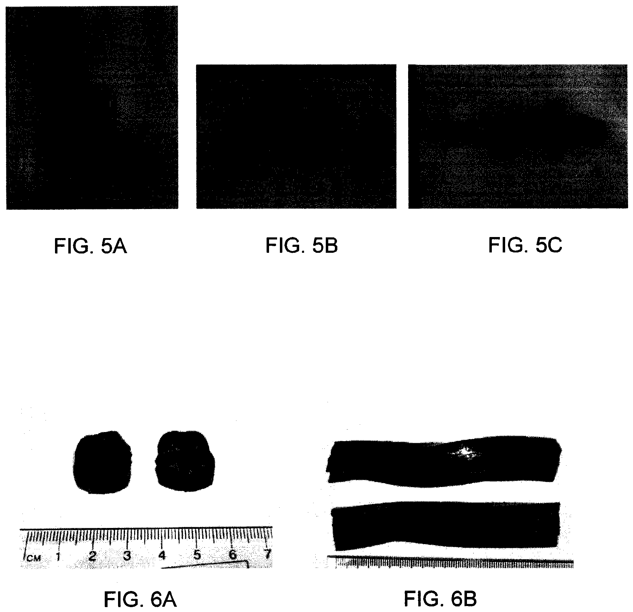

FIGS. 5A - 5C are photographs of embodiments comprising a tubular form of the composition, *i*.*e*., the chewy component rolled in a tube of meat jerky. The compositions were made using the third recipe listed in Example 1. The photographs show the compositions cut into various lengths to manipulate chewing duration.
FIGS. 6A and 6B are photographs of embodiments in which the composition is formed by cooking and cooling the pourable paste within its final packaging. FIG. 5A shows a "nugget" with an irregular texture formed by the packaging during cooling. FIG. 5B shows a twisted rod formed by twisting the packaged product during cooking and/or cooling.

### DETAILED DESCRIPTION OF THE INVENTION

### Definitions

All percentages expressed herein are by weight of the total weight of the composition unless expressed otherwise.

All ratios expressed herein are on a weight:weight (w/w) basis unless expressed otherwise.

Ranges are used herein in shorthand, so as to avoid having to list and describe each and every value within the range. Any appropriate value within the range can be selected, where appropriate, as the upper value, lower value, or the terminus of the range.

As used herein, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods." Likewise the terms "include", "including" and "or" should all be construed to be inclusive, unless such a construction is clearly prohibited from the context. Similarly, the term "examples," particularly when followed by a listing of terms, is merely exemplary and illustrative and should not be deemed to be exclusive or comprehensive.

The term "comprising" is intended to include embodiments encompassed by the terms "consisting essentially of' and "consisting of'. Similarly, the term "consisting essentially of' is intended to include embodiments encompassed by the term "consisting of."

The methods and compositions and other advances disclosed herein are not limited to particular methodology, protocols, and reagents described herein because, as the skilled artisan will appreciate, they may vary. Further, the terminology used herein is for the purpose of describing particular embodiments only, and is not intended to, and does not, limit the scope of that which is disclosed or claimed.

Unless defined otherwise, all technical and scientific terms, terms of art, and acronyms used herein have the meanings commonly understood by one of ordinary skill in the art in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The term "humectant" as used herein refers to substances that absorb or help other substances retain moisture. Substances such as glycerol are sometimes referred to both as humectants and as plasticizers. The role of glycerol, or other substances that can substitute for glycerol as detailed herein, in the present invention is as a locking agent to bridge across the gelatin structure to add density and strength

For avoidance of doubt, the term "glycerol," as used herein, refers to propane-1,2,3-triol (IUPAC), and may also be known to the skilled person as glycerin, glycerine or propanetriol. Glycerol is a simple polyol (sugar alcohol) compound. It is a colorless, odorless, viscous liquid. Glycerol contains three hydroxyl groups that are responsible for its solubility in water and its hygroscopic nature.

The term "collagen" refers to a group of naturally occurring proteins found in animals, especially in the flesh and connective tissues of vertebrates. Collagen is composed of a triple helix of polypeptide chains. In the form of elongated fibrils, collagen is mostly found in fibrous tissues such as tendon, ligament and skin, and is also abundant in cornea, cartilage, bone, blood vessels, the gut, and intervertebral disc. The term "collagen derivative" refers to a substance that has been produced or derived from collagen. An exemplary form of collagen derivative is gelatin, Gelatin (or gelatine) is a translucent, colorless, brittle (when dry), flavorless solid substance composed of a mixture of peptides and proteins produced by partial hydrolysis of collagen extracted from various animal by-products. It is commonly used as a gelling agent in food, pharmaceuticals, photography, and cosmetic manufacturing. Gelatin is an irreversibly hydrolyzed form of collagen, and is classified as a foodstuff. It is found in most gummy candies as well as other products such as marshmallows, gelatin dessert, and some ice cream, dip and yogurt. Household gelatin comes in the form of sheets, granules, or powder.

When referring to the edible composition of the invention, the term "solid," or "solid, three-dimensional," may be used. These terms are not intended to limit the nature of the product by way of its texture, hardness, chewiness, or any other such parameter. They are instead intended to distinguish the compositions from substantially flat films (*e*.*g*., gelatin films or hollow compositions (*e*.*g*., gelatin capsules) made from such films.

### The Invention

The invention springs in part from the discovery that mixtures such as gelatin (or collagen) and humectants such as glycerol can be used to produce chewy edible compositions by mixing the components at cold temperatures. Surprisingly, it was found that mixing such components at or near the freezing point of water decreases viscosity and facilitates ease of handling, rather than having the previously expected opposite effect.

Thus, one aspect of the invention features a method for preparing a chewy edible composition, comprising: (1) preparing a liquid premix by mixing a humectant with other liquid ingredients, if any; (2) preparing a dry premix by mixing collagen or a collagen derivative with other dry ingredients, if any; (3) chilling the liquid premix and the dry premix to a temperature between about -15°C to about 7°C; (4) mixing the liquid premix with the dry premix at a temperature between about -15°C to about 7°C to form a pourable paste; (5) pouring the paste into a heat-stable container; (6) heating the container at a temperature and for a time sufficient to produce a cooked paste; and (7) cooling the cooked paste to form the chewy edible composition.

Glycerol is preferred for use as a humectant in the present invention. However, many other substances can substitute for glycerol in the compositions of the invention. Substances that have been tested and found suitable include erythritol, 1,2-propanediol (any isomer), ethanol and sorbitol. Other substances that are suitable include, but are not limited to: threitol; dihydroxyacetone; 1,3-propandiol (any isomer); 1,2,3-butanetriol (any isomer); 1,2,4 butanetriol (any isomer); 1,2 butanediol(any isomer); 2,3 butanediol (any isomer); arabitol; xylitol; ribitol; mannitol; galactitol; fucitol; iditol; inositol; volemitol; isomalt; maltitol; lactitol; maltotriitol; maltotetraitol; polyglycitol; polyethylene glycol(PEG) (all chains lengths) and non-toxic PEG derivatives including methoxy polyethylene glycols; sugar alcohols; all other non-toxic diols or triols preferably with low melting point; hydrogenated sugars or sugar derivatives including hydrogenated starches; non-toxic aminoalcohols preferably with low melting point; and all related diols and triols derivatives including esters, ketone or aldehydic derivatives, e.g. ethyl 2,3-dihydroxypropanoate. For ease of reference, the formulations typically are disclosed with reference to glyercol as the humectant; however, one or more, or combinations of, the above-listed humectants can be used in place of glycerol.

The liquid pre-mix is prepared by providing glycerol (or other humectants) alone, or mixing it with at least one other liquid pre-mix ingredient that can include, but is not limited to, sugar, sugar alcohols, water, pre-prepared sugar-water syrups, and flavor enhancers. The liquid pre-mix can be prepared with heating, if necessary. Sugars are selected from any sugar or sugar mixture. Typical sugars include glucose, fructose, maltose and sucrose, to name a few. Other suitable sugars can include any edible substance, both aldoses and ketoses and all isomers there of, with the chemical structure Cx(H₂O)y; for instance dihydroxyacetone, glyceraldehydes; ribose, deoxyribose, arabinose, xylose, ribulose; erythrose; mannose; sorbose; galactose ; fucose; idose; inosose; levulose; ribulose; isomaltose; lactose; sedoheptulose, manmoheptulose; *i.e.,* generally all non-toxic sugars including trioses, tetroses, pentoses, hexoses and heptoses; amino-sugars including glucosamine; whey powder; all types of milk powder; and sugar derivatives including sucralose; palm sugar; coconut sugars and inulin., or any combination of the foregoing The sugar alcohol can be any sugar alcohol used in food preparation, for instance, sorbitol [arabitol; xylitol; ribitol; mannitol; galactitol; fucitol; iditol; inositol; volemitol; isomalt; maltitol, lactitol, or combinations thereof. The pre-prepared sugar-water syrups may comprise glucose syrup, golden syrup, natural syrups such as maple syrup, or agave syrup, and honey, to name a few. Other syrups include treacle; molasses; sucrose syrup; high fructose corn syrup, invert syrup (fructose and glucose syrup); hydrogenated starch syrup; condensed milk; all milk syrups including whey syrup; permeate concentrate; whey ultrafiltrate concentrate syrup; fruit concentrate syrups/nectars; fruit juices and concentrates; malt syrups and malt concentrates; palm sugar syrup; sorghum syrup; agave nectar; barley malt syrup; birch syrup; brown rice syrup; corn syrup; kithul treacle; sugar beet syrup; stevia; chicory extract; yacon syrup, and any combination of the foregoing. The flavor enhancers can include any naturally occurring or manufactured palatant, including salt, Worcestershire sauce, hickory smoke liquid, bacon aroma; beef stock powder; vegemite; SPA (Halycon proteins Vic Australia), and combinations thereof, to name a few. The liquid pre-mix can also comprise micronutrients such as vitamins and minerals to provide additional nutritional value to the edible composition.

The liquid pre-mix should be formulated such that the water content (including the water contained in any syrup or liquefied sugar), does not exceed about 50% of the pourable paste formed when the liquid and dry pre-mixes are combined. In particular embodiments, the water content of the pourable paste is less than about 50%, 49%, 48%, 47%, 46%, 45%, 44%, 43%, 42%, 41%, 40%, 39%, 38%, 37%, 36%, 35%, 34%, 33%, 32%, 31%, 30%, 29%, 28%, 27%, 26%, 25%, 24%, 23%, 22%, 21%, 20%, 19%, 18%, 17%, 16%, 15%, 14%, 13%, 12%, 11%, 10%, 9%, 8%, 7%, 6%, 5%, 4%, 3%, 2% or 1%. In other embodiments, the water content of the pourable paste is up to about 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49% or 50%. In particular embodiments, the water content of the pourable paste is between about 0% and about 50%, or between about 5% and about 45%, or between about 10% and about 40%, or between about 15% and about 35%, or between about 20% and about 30%, or between about 0% and 20%, or between about 0% and 15%, or between about 0% and 10%, or between about 0% and 5%. It is noted that lower moisture products can be stronger and/or have higher melting points.

The liquid pre-mix should also be formulated such that the humectant content is between about 15% and about 40% of the pourable paste formed when the liquid and dry pre-mixes are combined. In certain embodiments, the humectant content of the pourable paste is at least about 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38% or 39%. In other embodiments, the humectant content of the pourable paste is less than about 40%, 39%, 38%, 37%, 36%, 35%, 34%, 33%, 32%, 31%, 30%, 29%, 28%, 27%, 26%, 25%, 24%, 23%, 22%, 21%, 20%, 19%, 18%, 17% or 16%. In certain embodiments, the humectant content of the pourable paste is between about 15% and about 40% as mentioned above, or between about 20% and about 35%, or between about 25% and about 30%.

Separately, a dry pre-mix comprising collagen or a collagen derivative is also prepared. The dry pre-mix may comprise additional ingredients, for instance, natural or artificial acidifying agents, antioxidants, flavor enhancers, preservatives, colorants, and other nutritional components such as starches and flour. In a particular embodiment, sorbic acid is included in the dry pre-mix. In another embodiment, an antioxidant such as NATUROX™ is included. In another embodiment, a flour, such as rice bubble flour, is included. In another embodiment, titanium dioxide is included. The dry pre-mix can also comprise micronutrients such as vitamins and minerals to provide additional nutritional value to the edible composition.

The dry pre-mix should be formulated such that the collagen or collagen derivative content is between about 20% and about 65% of the pourable paste formed when the liquid and dry pre-mixes are combined. In certain embodiments, the collagen or collagen derivative content of the pourable paste is at least about 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, or 64%. In other embodiments, the the collagen or collagen derivative content of the pourable paste is less than about 65%, 64%, 63%, 62%, 61%, 60%, 59%, 58%, 57%, 56%, 55%, 54%, 53%, 52%, 51%, 50%, 49%, 48%, 47%, 46%, 45%, 44%, 43%, 42%, 41%40%, 39%, 38%, 37%, 36%, 35%, 34%, 33%, 32%, 31%, 30%, 29%, 28%, 27%, 26%, 25%, 24%, 23%, 22%, or 21%. In certain embodiments, the the collagen or collagen derivative content of the pourable paste is between about 20% and about 65% as mentioned above, or between about 25% and about 60%, or between about 30% and about 55%, or between about 35% and about 50%, or between about 40% and about 45%.

The liquid pre-mix and the dry pre-mix are chilled to the specified temperature range prior to mixing. The appropriate temperature range is between about -15°C and about 7°C. In particular embodiments, the temperature range is between about -15°C and about -14°C, or about -13°C, or about -12°C, or about -11°C, or about -10°C, or about -9°C, or about -8°C, or about - 7°C, or about -6°C or about -5°C or about -4°C or about -3°C or about -2°C or about -1°C or about 0°C or about 1°C or about 2°C or about 3°C or about 4°C or about 5°C or about 6°C or about 7°C. In other embodiments, the temperature range is between about -15°C, or about -14°C, or about - 13°C, or about -12°C, or about -11°C, or about -10°C, or about -9°C, or about -8°C, or about -7°C, or about -6°C or about -5°C or about -4°C or about -3°C or about -2°C or about -1°C or about 0°C or about 1°C or about 2°C or about 3°C or about 4°C or about 5°C or about 6°C and about 7°C. In particular embodiments, the temperature range is between about -10°C and about 7°C, or between about -8°C and about 6°C, or between about -6°C and about 5°C, or between about -5°C and about 4°C.

The liquid pre-mix and the dry pre-mix are combined at the chilled temperature ranges specified above. The chilled temperature may be the same as or different from the temperature range to which the pre-mixes were adjusted prior to combining them; however, the temperatures remain within the ranges set forth above. The dry pre-mix is placed in a mixer, preferably a low shear mixer, and the liquid pre-mix is slowly added while stirring to form a pourable paste. This step also may be performed by hand. The steps can be reversed, *i.e*., the dry pre-mix can be added to the liquid pre-mix. The inventors have determined that gentle mixing, *i.e.,* at low shear, combined with the designated temperature environment, results in formation of an easily managed, pourable paste, rather than a viscous, sticky paste that would be difficult to handle.

At this stage, a wide variety of inclusions may be added to the pourable paste, ranging up to, *e*.*g*., 80% of the paste by weight. Such inclusions are selected to customize the edible composition, for instance, as a treat for a dog, cat, or other companion animal. They may comprise, but are not limited to: nuggets of jerky, dried liver, dried fruit, extruded semi-moist petfood, breakfast cereal, crushed biscuits, dried meat analogs, dried vegetables/semi-moist vegetables, and granules or liquid additives of palatant materials.

The pourable paste is poured into a heat stable container, such as a mold, pan or similar container suitable for heating. Alternatively, as described in greater detail below, the pourable paste is poured into its final packaging material.

The heat stable container holding the pourable paste is heated for a time and at a temperature suitable to produce a cooked product, *i.e.,* by melting the paste components together. Such heating is well known to the skilled artisan, who understands that the combination of time and temperature produces the cooked product. Thus, heating time varies with temperature, mixture formulation, design of the container, and design of the heating apparatus. In one embodiment, the paste is baked in an oven at75°C to 90°C for 0.3 hrs to 3 hours until the mixture melts. The melted mixture is then cooled, with the resultant composition being transparent, translucent or opaque and comprising a chewy, rubbery consistency.

The composition is then removed from the heat-stable container, optionally rolled in a dusting agent and typically, but optionally, divided into an appropriate shape such as bars, small cubes or any other desired shape, depending on the application. For example, for items that may be consumed in a short duration (*i*.*e*. in as little as 30 seconds), products typically have a maximum size of 8 cm³ (e.g., 2 cm × 2 cm × 2 cm or some other dimension resulting in the same overall volume). It is noteworthy that the short duration treats are readily water soluble, thereby making them particularly advantageous in guarding against choking should they become lodged in the throat of the person or animal consuming them. For edible items designed to be consumed in a longer duration, products typically have a size of between about 8 cm³ and about 40 cm³, for instance, 1-2 cm × 1-2 cm × 8-10 cm. Chewing duration was found to be dependent on the formula used and inclusions added. For instance, in formulas having high water or high sugar or high inclusion content, chewing duration was as low as 40 seconds, versus 5 minutes where the treat comprised solely gelatin and glycerol. The longer duration treats offer the same choking prevention advantage as the short duration treats.

As mentioned above, gelatin is the collagen derivative typically used in practice of the present invention. However, collagen itself can be used as an alternative to gelatin. Gelatin is sometimes difficult to source or is the result of a costly synthesis. Collagen is a less expensive and more natural alternative and can be obtained by extracting it directly from bone, skin or other natural collagen sources.

In once process, bone, skin or other lean collagen sources can be cut into small, discrete chunks and placed in a cooker, preferably a pressure cooker. The collagen source is then covered with a mixture of desired glycerol, optionally water, and optionally, organic acid *(e.g.,* acetic acid). The desired amounts of glycerol and water may be, for example, chosen from one of the formulations above.

The mixture is heated to between 80°C to 120°C for 30 to 60 minutes and then filtered while hot. After cooling the filtrate to less than 10°C, any residual fat from the collagen source can be removed. The filtrate is then transformed into the pourable paste by adding at least one of water (if not added previously), sugar, additional glycerol, sorbic acid and mixing in a low shear at about -15°C to about 7°C, or preferably, about -5°C to about 4°C, as described above

Examples of bone types include trimmed beef hooves, lamb trotters or swine trotters. It is preferred the hooves or trotters be pickled for improved collagen extract quality. A combination of degreased skin and rawhide may be substituted for the bone in a ratio of approximately one part degreased skin to three parts rawhide. Another alternate formulation for the base stock is using ligaments or tendons from beef cattle, kangaroo, ostrich, and any other suitable animal as the collagen source.

In certain embodiments, the chewy edible composition can be further customized as a pet treat by configuring it in a sandwich-like arrangement alongside one or multiple thin sheets of jerky; however, other materials including dried ham, dried sliced chicken, dried sliced turkey, dried sliced pork, sliced Biltong, dried sliced liver, any other analogous sliced meat, biscuits, and saltines may be used as a substitute.

Preparation of the jerky material can be perfomed in accordance with known methods. For instance, a low fat source of meat is cooled to a temperature less than -5°C, preferably -18°C, then minced and blended with at least one of dextrose, salt, maltodextrin, sugar, wheat protein, glycerol, antioxidants (*e*.*g*., RENDOX™ NATUROX™), sorbic acid, smoke aroma and sodium nitrite. Each of the blended ingredients may be pre-cooled to a temperature less than -5°C, preferably -18°C. The meat source may include reduced-fat beef rump, kangaroo, emu, crocodile, mechanically deboned turkey, mechanically deboned chicken and squid tubes.

This mixture is placed in a block mold (*e.g*., approximately 0.5 m × 1 m × 0.2 m where it is pressed and degassed under gentle vacuum. After vacuum treatment, the block is cooled at less than -18°C for at least 24 hours after which time it is thinly sliced into sheets (*e*.*g*., approximately 2 mm thick). The slices are then placed onto mesh trays and loaded into a preheated oven and dried, *e*.*g*., at 80°C to 90°C for about 40 minutes to 3 hours. Timing may be optimized for specific oven characteristics and also manipulated depending on exact temperatures used. For example, drying may also occur for a longer period of time at lower temperatures.

After removing from the oven, the dried sheets are cooled. For jerky being used as bookends in a sandwich-type treat, the slices are pierced multiple times such that the sheets comprise holes 0.5 mm to 1.0 mm in diameter.

For a single faced sandwich, the slices are placed at the bottom of a mold or tray and the above pourable paste is poured into the mold or tray over the top of the sliced jerky. To facilitate layer binding between the jerky slice and the paste as it cooks, a porous layer of dried meat, expanded biscuit, expanded cereal based material, dried fruit, dried vegetable, fruit leather or jerky may be added as an interface.

If desired, a second sheet of jerky may be placed over the top of the pourable paste. The second sheet is gently pressed to force paste mixture to penetrate the holes of the second sheet of jerky. This is conducted prior to the heating step. Pressure may also be maintained during the subsequent heating step. Exact time and temperature is relative to thickness of the paste-jerky combination and oven characteristics. During the heatng, the paste may expand into the jerky holes to ensure binding of the two layers. The resultant product is removed from the heating source, cooled, and then optionally cut into a shape and size for the desired application, *i*.*e*. as a short duration or longer duration treat. The items may be subsequently coated or enrobed with another component suitable for the target consumer.

Once completely formed, the chewy edible compositions, in whichever formulation described above, can be packaged for sale. One option is to perform the heating step by pouring the pourable paste into packaging designed for the consumer end user. Appropriate packaging material should be heat-stable, for instance, capable of surviving temperatures greater than 90°C for at least 2 hours. Preferably, the material should be able to survive temperatures ranging from 90°C to 97°C for at least 2 hours. Suitable packaging materials include, but are not limited to, polyacrylate and derivatives thereof, high density polyethylene (HDPE); polypropylene (PP); polyvinylchloride (PVC); polyethylene terephthalate (PET); polystyrene (PS); high impact polystyrene (HIPS); Polyamide (PA), or combinations of such materials. Storage studies have shown stable and palatable products lasting up to 3 years using a polyacrylate type of packaging material.

Packaged products may be transparent, translucent, or opaque with multiple potential shapes including small cubes or any other molded shape. Colors of the final product may include clear, white, or brown, depending on the ingredients used (*e*.*g*, the type of sugar used in the formulation influences the appearance of the final product). Furthermore, dyes of any color may be selected to enhance appearance, palatability, and consumer interest and appeal.

The process described above can be adapted to produce a chewy edible composition for any purpose. In a preferred embodiment, the edible composition is formulated as a pet treat for a dog, cat or other companion animal. However, edible compositions can also be formulated for human consumption, such as by an adult or a child.

Another aspect of the invention features a pourable paste for producing a chewy edible composition of the present invention. The pourable paste comprises a humectant, such as glycerol and/or the other humectants described above, and collagen or a collagen derivative, among other optional ingredients. In particular embodiments, the paste comprises less than 50% water as described above. In other embodiments, the pourable paste comprises less than 30% water. Pourability of the paste is achieved by chilling a liquid pre-mix comprising the glycerol, and a dry pre-mix comprising the collagen, gelatin or other collagen derivatives, at the specified temperature range outlined above, and then mixing the pre-mixes together at the same temperature range, using a low-shear mixing process. As used herein, the term "pourable" means that the paste is of sufficiently low viscosity and stickiness that it can be poured or spooned into another container, such as a heat-stable container, without undue difficulty.

The content of humectant and collagen or collagen derivative is as described above. In certain embodiments, the pourable paste comprises between about 15% and about 40% glycerol, between about 20% and about 65% gelatin, and between abouts 0% and about 50% water, optionally comprising sugar or a sugar alcohol.

The pourable paste can also contain additional ingredients, including but not limited to sugar, sugar alcohols, water, pre-prepared sugar-water syrups, flavor enhancers. natural or artificial acidifying agents, antioxidants, preservatives, colorants, and other nutritional components such as starches and flour, and micronutrients such as vitamins and minerals to provide additional nutritional value to the edible composition.

Another aspect of the invention features a chewy edible composition comprising glycerol, or a substitute therefore as described above, and collagen or a collagen derivative such as gelatin, and about 25% or less water. In certain embodiments, the composition is substantially free of water. The compositions typically comprise between about 25% and about 70% collagen or collagen derivative, between about 20% and about 50% humectant such as glycerol, between about 0% and about 25% water, and optional sugar or sugar alcohol.

Examples of the components of certain embodiments of chewy edible compositons are show in Table 1 below.

**TABLE 1. Components of various examples of chewy edible compositions (wt%)**

| | A | B | C | D | E | F | G | H | I | J | K | L | M | N | O | P |
|---|---|---|---|---|---|---|---|---|---|---|---|---|---|---|---|---|
| Gelatin | 54 | 33 | 42 | 42 | 29 | 26 | 23 | 29 | 29 | 29 | 68 | 57 | 51 | 56 | 56 | 33 |
| Glycerol | 46 | 30 | 36 | 18 | 26 | 30 | 21 | 26 | 26 | 26 | 20 | 21 | 19 | 20 | 20 | 33 |
| Water | | | 22 | 22 | 16 | 18 | 17 | | | | 12 | | | | | |
| Sugar | | 33 | | | 29 | | 39 | | | | | 22 | 20 | 21 | 21 | 32.5 |
| Sorbitol | | | | 18 | | | | | | | | | | | | |
| Molasses | | | | | | | | | | 45 | | | | | | |
| Rice Krispies Flour | | | | | | 26 | | | | | | | | | | |
| Golden Syrup | | | | | | | | 45 | | | | | | | | |
| Glucose Syrup | | | | | | | | | 45 | | | | | | | |
| Ground Jerky | | | | | | | | | | | | | | | | |
| Others inc. Flavours/ Aromas | | 4 | | | | | | | | | | | 10 | | | 0.1 |
| Titanium Dioxide | | | | | | | | | | | | | | 1 | | |
| Salt | | | | | | | | | | | | | | | | 0.3 |
| Sorbic Acid | | | | | | | | | | | | | | | | 1.1 |
| Blood Meal | | | | | | | | | | | | | | | 1 | |
| Total | 100 | 100 | 100 | 100 | 100 | 100 | 100 | 100 | 100 | 100 | 100 | 100 | 100 | 100 | 100 | 100 |

The chewy edible compositions of the present invention are distinct from gelatin films, such as those used to produce gel-caps, for instance. Such films typically are softer and more pliable than the compositions of the invention, due in part to inclusion of substances that can interefere with the binding and/or toughness of the material, or higher amounts of such substances than included in the present compositions. Moreover, the chewy edible composition of the present invention has a solid three-dimensional shape. The shape can be any desired shape that can be formed, cut or molded in the process of heating the above-described pourable paste. In one embodiment, the composition is customized as a pet treat for a companion animal, such as a dog or cat. Depending on the starting formulation, the resultant edible composition can be more or less chewy. For instance, a composition with a higher sugar content, or a higher sugar to glycerol ratio (*e*.*g*., 1.7 : 1) can be more easily chewed than a composition with a lower sugar content or a lower sugar to glycerol ratio (*e*.*g*., 0 : 1). Additionally, smaller sized compositions can be chewed more quickly. Thus, the chewy edible composition can be sized for consumption by a smaller or larger individual, such as a cat as compared to a dog, or a small dog as compared to a large dog, or a child as compared to an adult. In one embodiment, the composition has a total volume less than about 8 cm³. In another embodiment, the composition has a total volume between about 8 cm³ and about 40 cm³. The skilled artisan will understand that other sizes appropriate to other consumers can easily be devised.

### EXAMPLES

The invention can be further detailed by the following examples, although it will be understood that these examples are included merely for purposes of illustration and are not intended to limit the scope of the invention unless otherwise specifically indicated.

### Example 1 - Pre-Mix Formulations

In one example, the liquid pre-mix contained sugar (27.9%), glycerol (27.9%), water (15.6%), Worcestershire sauce (0.3%), and hickory smoke liquid (0.1%) and the dry pre-mix contained sorbic acid (0.3%), NATUROX™ antioxidant mix (0.1%), and gelatin (27.9%).

In another example, the liquid pre-mix contained sugar (33.9%), glycerol (33.9%), and water (9.5%) and the dry pre-mix contained sorbic acid (0.1%) and gelatin (22.6%).

In another example, the liquid pre-mix contained glucose syrup (45.1%) and glycerol (26.2%) and the dry pre-mix contained gelatin (28.7%).

In another example, the liquid pre-mix contained the liquid pre-mix comprises golden syrup (45.1 %) and glycerol (26.2%) and the dry pre-mix contained gelatin (28.7%).

In another example, the liquid pre-mix contained sorbitol (18.0%), glycerol (18.0%), and water (22.0%) and the dry pre-mix contained gelatin (42.0%).

In another example, the liquid pre-mix contained sugar (32.2%), glycerol (23.0%), and water (20.5%) and the dry pre-mix contained salt (1.7%) and gelatin (22.6%).

In another example, the liquid pre-mix contained sugar (39.2%), glycerol (20.9%), and water (16.9%), and the dry pre-mix contained gelatin (23.0%).

In another example, the liquid pre-mix contained glycerol (29.7%) and water (18.5%) and the dry pre-mix contained rice bubble flour (25.9%) and gelatin (25.9%).

In another example, the liquid pre-mix contained glycerol (37.0%) and the dry pre-mix contained gelatin (63.0%).

In another example, the liquid pre-mix contained sugar syrup (32.8%), glycerol (32.8%), salt (1.1%), and hickory smoke liquid (0.1%) and the dry pre-mix contained sorbic acid (0.3%), NATUROX™ (0.1%) and gelatin (32.8%).

In another example, the liquid pre-mix contained sugar (29.6%), glycerol (25.2%), water (16.4%) and hickory smoke liquid (0.3%) and the dry pre-mix contained titanium dioxide (1.0%) and gelatin (27.5%).

### Example 2 - Preparation of Pourable Paste Using Collagen as Starting Material

In one example, bone (collagen feedstock) (71.0%), glycerol (18.0%), water (9.0%), and acetic acid (1.0%) were placed in a pressure cooker. The mixture was heated to between about 80°C to about 120°C for approximately 30 to 60 minutes and then filtered while hot. After cooling, the filtrate was mixed with sugar (18.8%) in a low shear mixer within the temperature range of at about -15°C to about 7°C, or about -5°C to about 4°C. In the step of mixing with sugar, the filtrate comprised the balance of the total mixture (81.2%).

In another example, a mix of ligament or tendon (collagen feedstock) (3 8.0%), glycerol (42.0%), water (14.0%) and acetic acid (5.0%) were placed in a pressure cooker. The mixture was heated to between about 80°C to about 120°C for approximately 30 to 60 minutes and then filtered while hot. After cooling, the filtrate was mixed with glycerol (10.0%) in a low shear mixer at about -15°C to about 7°C, or about -5°C to about 4°C. In the step of mixing with glycerol, the filtrate comprised the balance of the total mixture (90.0%).

### Example 3 - Formulations for Jerky Material

In one example of the jerky formulation, the initial mixture contained beef (or other animal material) (85.80%), dextrose (2.89%), salt (1.70%), maltodextrin (1.37%), sugar (1.80%), wheat protein (2.50%), glycerol (3.50%), RENDOX™ antioxidant or NATUROX™ (0.10%), sorbic acid (0.30%), smoke aroma (0.02%), and sodium nitrite (0.02%).

In another example of the jerky formulation, the initial mixture contained beef (or other animal material) (82.30%), dextrose (2.89%), salt (1.70%), maltodextrin (1.37%), sugar (1.80%), wheat protein (2.50%), glycerol (7.00%), RENDOX™ antioxidant or NATUROX™ (0.10%), sorbic acid (0.30%), smoke aroma (0.02%), and sodium nitrite (0.02%).

In another example of the jerky formulation, the initial mixture contained beef (or other animal material) (78.60%), dextrose (2.89%), salt (1.70%), maltodextrin (1.37%), sugar (1.80%), wheat protein (2.50%), glycerol (10.70%), RENDOX™ antioxidant or NATUROX™ (0.10%), sorbic acid (0.30%), smoke aroma (0.02%), and sodium nitrite (0.02%).

The present invention is not limited to the embodiments described and exemplified above. It is capable of variation and modification within the scope of the appended claims.

## Claims

1. A method for preparing a chewy edible composition, comprising:
preparing a liquid premix by mixing a humectant with other liquid ingredients, if any;
preparing a dry premix by mixing collagen or a collagen derivative with other dry ingredients, if any;
chilling the liquid premix and the dry premix to a temperature between about -15°C to about 7°C;
mixing the liquid premix with the dry premix at a temperature between about -15°C to about 7°C to form a pourable paste;
pouring the paste into a heat-stable container;
heating the container at a temperature and for a time sufficient to produce a cooked paste; and
cooling the cooked paste to form the chewy edible composition.

2. The method of 1, wherein the chilling step or the mixing step, or both, are performed at a temperature between about -5°C and about 4°C.

3. The method of claim 1, wherein the liquid premix further comprises water or an aqueous solution of sugar or a sugar alcohol and water, wherein the water is present in an amount less than about 50% of the paste.

4. The method of claim 3, wherein the water is present in an amount less than about 30% of the paste.

5. The method of claim 1, wherein the humectant is selected from glycerol, erythritol, 1,2-propanediol, ethanol and sorbitol, or combinations thereof.

6. The method of claim 1, wherein the collagen derivative is gelatin.

7. The method of claim 1, wherein the heat-stable container is a baking mold.

8. The method of claim 1, wherein the heat-stable container comprises packaging material.

9. The method of claim 1, comprising separating the chewy edible composition into portions.

10. The method of claim 8, wherein the portions are of sizes having a volume less than about 8 cm³.

11. The method of claim 8, wherein the portions are of sizes having a volume between about 8 cm³ and about 40 cm³.

12. The method of claim 1, wherein the chewy edible composition is formulated as a pet treat.

13. The method of claim 12, wherein the composition comprises additional pet treat components.

14. The method of claim 13, wherein the additional pet treat components are mixed in with the paste or layered underneath and/or on top of the paste prior to cooking.

15. A pourable paste for producing a chewy edible composition obtainable from a method of any one of claims 1 to 14, the paste comprising a humectant and collagen or a collagen derivative, wherein the paste comprises less than about 50% water.

16. The paste of claim 15, comprising less than 30% water.

17. The paste of claim 15, wherein the humectant is glycerol and the collagen derivative is gelatin.

18. The paste of claim 15, comprising between about 15% and about 40% glycerol, between about 20% and about 65% gelatin, and between abouts 0% and about 50% water, optionally comprising sugar or a sugar alcohol.

19. The paste of claim 15, further comprising at least one palatant for a dog or cat.

## Patentansprüche

1. Verfahren zum Herstellen einer zähen essbaren Zusammensetzung, umfassend:
Herstellen einer flüssigen Vormischung durch Mischen eines Feuchthaltemittels mit anderen flüssigen Inhaltsstoffen, falls vorhanden;
Herstellen einer trockenen Vormischung durch Mischen von Kollagen oder einem Kollagenderivat mit anderen trockenen Inhaltsstoffen, falls vorhanden;
Kühlen der flüssigen Vormischung und der trockenen Vormischung auf eine Temperatur zwischen etwa -15 °C bis etwa 7 °C;
Mischen der flüssigen Vormischung mit der trockenen Vormischung bei einer Temperatur zwischen etwa -15 °C bis etwa 7 °C, um eine gießbare Paste zu bilden;
Gießen der Paste in einen wärmebeständigen Behälter;
Erwärmen des Behälters bei einer Temperatur und für eine Zeit, die ausreicht, um eine gekochte Paste zu erzeugen; und
Kühlen der gekochten Paste, um die zähe essbare Zusammensetzung zu bilden.

2. Verfahren nach Anspruch 1, wobei der Kühlschritt oder der Mischschritt oder beide bei einer Temperatur zwischen etwa -5 °C und etwa 4 °C durchgeführt werden.

3. Verfahren nach Anspruch 1, wobei die flüssige Vormischung ferner Wasser oder eine wässrige Zuckerlösung oder einen Zuckeralkohol und Wasser umfasst, wobei das Wasser in einer Menge von weniger als etwa 50 % der Paste vorliegt.

4. Verfahren nach Anspruch 3, wobei das Wasser in einer Menge von weniger als etwa 30 % der Paste vorliegt.

5. Verfahren nach Anspruch 1, wobei das Feuchthaltemittel ausgewählt ist aus Glycerin, Erythritol, 1,2-Propandiol, Ethanol und Sorbit oder Kombinationen davon.

6. Verfahren nach Anspruch 1, wobei das Kollagenderivat Gelatine ist.

7. Verfahren nach Anspruch 1, wobei der wärmebeständige Behälter eine Backform ist.

8. Verfahren nach Anspruch 1, wobei der wärmebeständige Behälter Verpackungsmaterial umfasst.

9. Verfahren nach Anspruch 1, umfassend Trennen der zähen essbaren Zusammensetzung in Portionen.

10. Verfahren nach Anspruch 8, wobei die Portionen von Größen sind, die ein Volumen von weniger als etwa 8 cm³ aufweisen.

11. Verfahren nach Anspruch 8, wobei die Portionen von Größen sind, die ein Volumen von zwischen etwa 8 cm³ und etwa 40 cm³ aufweisen.

12. Verfahren nach Anspruch 1, wobei die zähe essbare Zusammensetzung als ein Haustierhappen formuliert ist.

13. Verfahren nach Anspruch 12, wobei die Zusammensetzung zusätzliche Haustierhappenbestandteile umfasst.

14. Verfahren nach Anspruch 13, wobei die zusätzlichen Haustierhappenbestandteile vor dem Kochen mit der Paste gemischt oder unter und/oder auf der Paste geschichtet werden.

15. Gießbare Paste zum Herstellen einer zähen essbaren Zusammensetzung, erhältlich aus einem Verfahren nach einem der Ansprüche 1 bis 14, wobei die Paste ein Feuchthaltemittel und Kollagen oder ein Kollagenderivat umfasst, wobei die Paste weniger als etwa 50 % Wasser umfasst.

16. Paste nach Anspruch 15, umfassend weniger als 30 % Wasser.

17. Paste nach Anspruch 15, wobei das Feuchthaltemittel Glycerin ist und das Kollagenderivat Gelatine ist.

18. Paste nach Anspruch 15, umfassend zwischen etwa 15 % und etwa 40 % Glycerin, zwischen etwa 20 % und etwa 65 % Gelatine und zwischen etwa 0 % und etwa 50 % Wasser, gegebenenfalls umfassend Zucker oder einen Zuckeralkohol.

19. Paste nach Anspruch 15, ferner umfassend mindestens einen Geschmacksträger für einen Hund oder eine Katze.

## Revendications

1. Procédé de préparation d'une composition comestible à mâcher, comprenant :
la préparation d'un prémélange liquide en mélangeant un humectant avec d'autres ingrédients liquides, le cas échéant ;
la préparation d'un prémélange sec en mélangeant du collagène ou un dérivé de collagène avec d'autres ingrédients secs, le cas échéant ;
la réfrigération du prémélange liquide et du prémélange sec à une température comprise entre environ -15 °C et environ 7 °C ;
le mélange du prémélange liquide avec le prémélange sec à une température comprise entre environ -15 °C et environ 7 °C pour former une pâte apte au déversement ;
le déversement de la pâte dans un récipient stable à la chaleur ;
le chauffage du récipient à une température et pendant une période suffisante pour produire une pâte cuite ; et
le refroidissement de la pâte cuite pour former la composition comestible à mâcher.

2. Procédé selon 1, dans lequel l'étape de réfrigération ou l'étape de mélange, ou l'une et l'autre, sont exécutées à une température comprise entre environ -5 °C et environ 4 °C.

3. Procédé selon la revendication 1, dans lequel le prémélange liquide comprend en outre de l'eau ou une solution aqueuse de sucre ou d'un alcool de sucre et d'eau, dans lequel l'eau est présente en une quantité inférieure à environ 50 % de la pâte.

4. Procédé selon la revendication 3, dans lequel l'eau est présente en une quantité inférieure à environ 30 % de la pâte.

5. Procédé selon la revendication 1, dans lequel l'humectant est choisi parmi glycérol, érythritol, 1,2-propane-diol, éthanol et sorbitol, ou des combinaisons de ceux-ci.

6. Procédé selon la revendication 1, dans lequel le dérivé de collagène est de la gélatine.

7. Procédé selon la revendication 1, dans lequel le récipient stable à la chaleur est un moule de cuisson.

8. Procédé selon la revendication 1, dans lequel le récipient stable à la chaleur comprend un matériau d'emballage.

9. Procédé selon la revendication 1, comprenant la séparation de la composition comestible à mâcher en portions.

10. Procédé selon la revendication 8, dans lequel les portions sont de tailles ayant un volume inférieur à environ 8 cm³.

11. Procédé selon la revendication 8, dans lequel les portions sont de tailles ayant un volume compris entre environ 8 cm³ et environ 40 cm³.

12. Procédé selon la revendication 1, dans lequel la composition comestible à mâcher est formulée en tant que friandise pour animal de compagnie.

13. Procédé selon la revendication 12, dans lequel la composition comprend des composants supplémentaires de friandise pour animal de compagnie.

14. Procédé selon la revendication 13, dans lequel les composants supplémentaires de friandise pour animal de compagnie sont mélangés avec la pâte ou déposés en couches en dessous et/ou au-dessus de la pâte avant cuisson.

15. Pâte apte au déversement pour produire une composition comestible à mâcher pouvant être obtenue à partir d'un procédé selon l'une quelconque des revendications 1 à 14, la pâte comprenant un humectant et du collagène ou un dérivé de collagène, dans laquelle la pâte comprend moins d'environ 50 % d'eau.

16. Pâte selon la revendication 15, comprenant moins de 30 % d'eau.

17. Pâte selon la revendication 15, dans laquelle l'humectant est du glycérol et le dérivé de collagène est de la gélatine.

18. Pâte selon la revendication 15, comprenant entre environ 15 % et environ 40 % de glycérol, entre environ 20 % et environ 65 % de gélatine, et entre environ 0 % et environ 50 % d'eau, comprenant éventuellement du sucre ou un alcool de sucre.

19. Pâte selon la revendication 15, comprenant en outre au moins un agent de palatabilité pour un chien ou un chat.
